# EUROPÄISCHE PATENTANMELDUNG

(11) **EP 3 664 278 A1**
(43) Veröffentlichungstag der Anmeldung: **10.06.2020**
(21) Anmeldenummer: 18210695.5
(22) Anmeldetag: 06.12.2018
(51) Int. Cl.: H02P 1/46, H02P 27/16

(54) **VERFAHREN ZUR NETZSYNCHRONISATION EINER PERMANENTERREGTEN DREHSTROMMASCHINE MIT EINEM THYRISTOREN UMFASSENDEN SANFTSTARTER**

(71) Anmelder: Siemens Aktiengesellschaft, 80333 München (DE)
(72) Erfinder: Nannen, Hauke, 90443 Nürnberg (DE); Zatocil, Heiko, 90469 Nürnberg (DE)

(57) **Zusammenfassung**

Die Erfindung beschreibt ein Verfahren zur Netzsynchronisation einer permanenterregten Drehstrommaschine (M) mit einem Thyristoren umfassenden Sanftstarter (SS) sowie mit mechanischen Bypasskontakten zur Überbrückung der Thyristoren im Netzbetrieb. Das erfindungsgemäße Verfahren umfasst in einem Schritt a) die Erzeugung eines ersten Steuersignals, durch das das Leitendschalten der mechanischen Bypasskontakte initiiert wird, nach dem Erreichen eines vorgegebenen Kriteriums beim Hochlaufen der Drehstrommaschine an dem Sanftstarter, wobei der Zeitpunkt der Erzeugung des ersten Steuersignals einen Betätigungszeitpunkt der Bypasskontakte repräsentiert. In einem Schritt b) erfolgt die Erzeugung von Zündpulsen für die Thyristoren innerhalb eines Zeitraumes, der von dem Betätigungszeitpunkt bis zu einem Kontaktzeitpunkt der Bypasskontakte reicht, mittels eines zweiten Steuersignals, wobei ein jeweiliger Zündpuls für einen Thyristor dann erzeugt wird, wenn eine Phasenstrommessung ergibt, dass der Strom in der zugeordneten Phase einen vorgegebenen Wert unterschreitet. In einem Schritt c) erfolgt das Betreiben der Drehstrommaschine (M) im Netzbetrieb über die Bypasskontakte.

## Beschreibung

Eine Drehstrommaschine wandelt mechanische Energie in Drehstrom oder Drehstrom in mechanische Energie um. Sie kann grundsätzlich als elektrischer Generator oder als Elektromotor betrieben werden. Als Sanftanlauf werden Maßnahmen zur Leistungsbegrenzung beim Einschalten eines elektrischen Gerätes, beispielsweise eines elektrischen Motors, bezeichnet.

Drehstrommaschinen werden gemäß der IEC-Norm 60034 anhand ihres Wirkungsgrades in verschiedene Energieeffizienzklassen eingeteilt. Gerade im unteren Leistungsbereich bis ca. 20kW lassen sich die gesetzlichen Wirkungsgrade für Elektroantriebe nur schwer einhalten, weshalb vermehrt die Verwendung von Permanentmagneten im Rotor angestrebt wird, z.B. als Permanenterregte Synchronmaschine (PMSM).

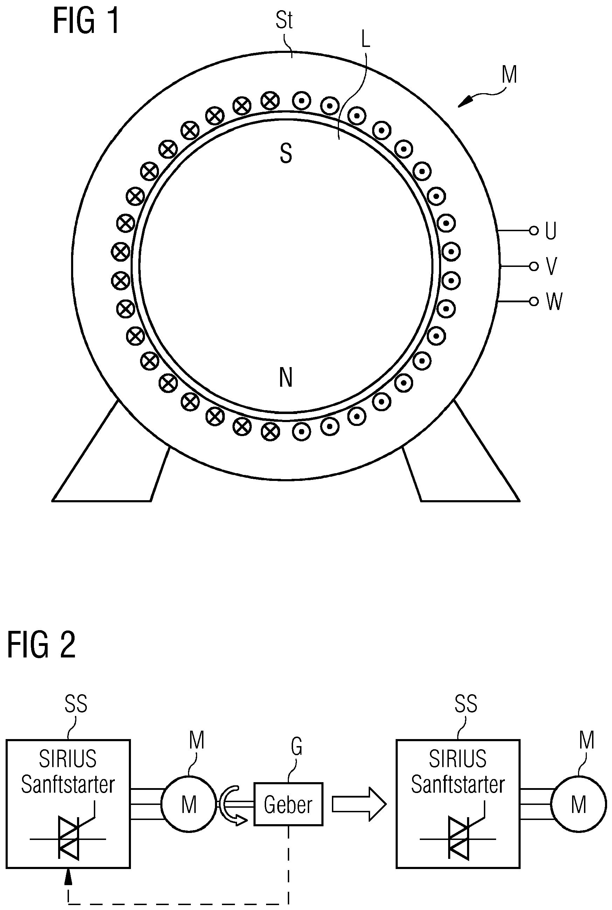

Figur 1 zeigt eine schematische Darstellung einer solchen permanenterregten Synchronmaschine M, in der Ausführung als Innenpolmaschine mit einem Stator St und einem Läufer L. Der Läufer umfasst einen magnetischen Nordpol N und Südpol S. Der Stator St umfasst Wicklungsstränge U, V, W. Die Darstellung ist lediglich beispielhaft zu verstehen und hat keine einschränkende Wirkung auf den Schutzbereich des beanspruchten Gegenstands.

Dieser Maschinentyp ermöglicht zwar hohe Energieeffizienzgrade, jedoch sind der Start sowie der Betrieb am starren Netz nicht ohne weiteres möglich.

Um dies zu ermöglichen, kann ein Dämpferkäfig im Läufer der Maschine vorgesehen werden, welcher zwar einen sicheren Hochlauf am starren Netz ermöglicht, jedoch das speisende Netz durch sehr hohe Anlaufströme stark belastet.

Ebenso ist der Betrieb an einem geeigneten leistungselektronischen Stellglied, wie zum Beispiel einem Frequenzumrichter oder Sanftstarter möglich. Hier stellt insbesondere der Einsatz eines Sanftstarter, auch Sanftanlaufgerät genannt, eine kostenfreundliche Lösung zum Hochlauf einer permanenterregten Synchronmaschine am starren Netz dar. Ein solcher Sanftstarter reduziert beim Einschalten (z. B. mittels Phasenanschnitt) die Spannung und erhöht diese langsam bis zur vollen Netzspannung. Ein derartiger Sanftanlauf ist allerdings häufig nur im lastlosen Zustand oder bei geringer Last möglich. Derzeit ist hierfür jedoch noch keine marktreife Lösung bekannt.

In der Dissertation von Dr. Marcel Benecke (Universität Magdeburg) mit dem Titel "Anlauf von energieeffizienten Synchronmaschinen mit Drehstromsteller" wird eine Lösung zum Hochlauf der permanenterregten Synchronmaschine an einem Sanftstarter vorgestellt. Das in dieser Arbeit vorgestellte Verfahren verwendet den aktuellen Polradwinkel der Maschine, sodass die für die Arbeit verwendeten Motoren mit einem entsprechenden Gebersystem ausgestattet werden mussten. Unter einem Geber versteht man Drehzahl- und Lagegeber. Diese erfassen die mechanischen Größen Drehzahl und Lage. Ihre Signale sind erforderlich, um die Regler mit Istwerten zu versorgen und die vorhandenen Lage- und Drehzahlregelkreise zu schließen. Für die vektoriellen Regelverfahren bei Drehstromantrieben dienen die Lage- und Drehzahlsignale auch als Eingangsgröße für den Stromregelkreis. Der Geber erfasst in diesem Fall die Drehzahl und/oder Lage unmittelbar an der Motorwelle.

Das Gebersystem wirkt sich negativ auf die Kosten und die Verfügbarkeit des Systems aus, was derzeit eine Sanftstarterlösung für hocheffiziente Motoren unattraktiv macht. Aus diesen Gründen ist ein Verfahren zum Hochlauf ohne Geber anzustreben.

Beim Betrieb einer permanenterregten Synchronmaschine mit einem Sanftstarter wäre zur Realisierung verschiedenster Anwendungen eine Drehzahlregelung wünschenswert, die bislang nicht umgesetzt werden konnte.

Das benötigte Verfahren unterscheidet sich zu den im Stand der Technik bekannten geberlosen Verfahren dahingehend, dass es für einen Thyristorsteller und nicht einen Frequenzumrichter verwendbar sein muss. Somit sind diese bekannten Verfahren nicht anwendbar.

Aus der DE 10 2016 204 837 A1 ist ein Anlaufverfahren für einen Elektromotor bekannt, bei dem bei der Ermittlung eines Betätigungszeitpunkts für einen als Schütz mit einer Bypass-Halbleiterstrecke ausgebildeten Dreieck-Schalter die Anzugszeit des Dreieck-Schalters selbst berücksichtigt wird. Der Betätigungszeitpunkt entspricht im Wesentlichen dem Zeitpunkt, zu dem ein entsprechender Betätigungsbefehl den Dreieck-Schalter erreicht und das Anziehen des Dreieck-Schalters einsetzt. Der Betätigungszeitpunkt wird so gewählt, dass er um die Dauer der Anzugzeit vor dem angestrebten Schaltzeitpunkt liegt. Der elektromechanische Schaltkontakt ist zwecks einer schnellen und zeitlich präzisen Betätigung für eine bestimmte Dauer überbrückbar.

Es ist Aufgabe der Erfindung, ein Verfahren zur Netzsynchronisation einer permanenterregten Drehstrommaschine mit einem Sanftstarter anzugeben, welches Überströme beim Verbinden mit dem starren Netz vermeidet. Es ist weiterhin Aufgabe der Erfindung, eine permanenterregte Drehstrommaschine ohne Geber anzugeben, welche mit dem erfindungsgemäßen Verfahren arbeitet.

Diese Aufgaben werden gelöst durch ein Verfahren gemäß den Merkmalen des Anspruchs 1 sowie eine Steuervorrichtung und eine Drehstrommaschine gemäß den Merkmalen der Ansprüche 10 und 11. Vorteilhafte Ausgestaltungen ergeben sich aus den abhängigen Ansprüchen.

Die vorliegende Anmeldung beschreibt ein Verfahren zur Netzsynchronisation einer permanent erregten Drehstrommaschine mit einem Thyristoren umfassenden Sanftstarter sowie mit mechanischen Bypasskontakten zur Überbrückung der Thyristoren im Netzbetrieb. Unter einer Netzsynchronisation wird der Zeitpunkt oder die Phase am Ende des Hochlaufs der Drehstrommaschine, während der die Drehstrommaschine gezielt beschleunigt wird, bezeichnet, zu dem eine dauerhafte Verbindung der Phasen der Drehstrommaschine mit einem Versorgungsnetz möglich ist und vorgenommen wird.

Das Verfahren umfasst den Schritt des Erzeugens eines ersten Steuersignals, durch das das Leitendschalten der mechanischen Bypasskontakte initiiert wird, und zwar nach dem Erreichen eines vorgegebenen Kriteriums beim Hochlaufen der Drehstrommaschine an dem Sanftstarter. Der Zeitpunkt der Erzeugung des ersten Steuersignals repräsentiert hierbei einen Betätigungszeitpunkt der Bypasskontakte. Das Verfahren umfasst den weiteren Schritt des Erzeugens von Zündpulsen für die Thyristoren innerhalb eines Zeitraumes, der von dem Betätigungszeitpunkt bis zu einem Kontaktzeitpunkt der Bypasskontakte reicht, mittels eines zweiten Steuersignals, wobei ein jeweiliger Zündpuls für einen Thyristor dann erzeugt wird, wenn eine Phasenstrommessung ergibt, dass der Strom in der zugeordneten Phase einen vorgegebenen Wert unterschreitet. Der genannte Zeitraum ist die konstruktiv bedingte Zeit, die benötigt wird, um die mechanischen Bypasskontakte seit dem Betätigungszeitpunkt (der mit dem Erhalt eines entsprechenden Steuerbefehls zusammenfällt) zu schließen. Schließlich umfasst das Verfahren den Schritt des Betreibens der Drehstrommaschine im Netzbetrieb über die Bypasskontakte. Das Betreiben der Drehstrommaschine über die Bypasskontakte erfolgt ab dem Kontaktzeitpunkt, da die Bypasskontakte ab diesem Zeitpunkt leitend geschaltet sind.

Das vorgeschlagene Verfahren ermöglicht es, eine permanenterregte Drehstrommaschine, welche mittels eines Sanftstarters beschleunigt wird, mit dem Netz zu synchronisieren, ohne dass Überstromereignisse oder Pendelungen im Antriebsstrang auftreten. Insbesondere ermöglicht es das Verfahren, einen Differenzwinkel zwischen dem Netzwinkel und dem Rotorwinkel zu berücksichtigen, indem diese durch den parallelen Betrieb der Bypasskontakte und der Thyristoren während des Einschaltvorganges der Bypasskontakte betrieben werden. Sobald die Bypasskontakte leiten, verlöschen die Thyristoren von alleine, so dass die Drehstrommaschine im Netzbetrieb alleine über die Bypasskontakte betrieben wird. Der parallele Betrieb der beiden Schaltelemente vermeidet die unerwünschten Pendelungen des Antriebsstrangs und verhindert die ebenfalls unerwünschten Überströme.

Das vorgegebene Kriterium, das zur Erzeugung des ersten Steuersignals führt, umfasst insbesondere, dass eine Drehzahl der Drehstrommaschine eine in einem vordefinierten Drehzahlkorridor liegende Zieldrehzahl der Drehmomentmaschine erreicht hat. Hierdurch kann sichergestellt werden, dass durch das Schließen der Bypasskontakte Pendelungen des Antriebsstrangs und große Überströme verhindert werden, wobei nach dem Schließen der Bypasskontakte der Startvorgang und damit die Netzsynchronisation der permanenterregten Drehstrommaschine abgeschlossen ist.

Insbesondere kann vorgesehen sein, dass die Drehzahl geringfügig höher oder niedriger als die Netzdrehzahl ist. Dies stellt sicher, dass sich der Winkel des Netzes ausreichend schnell ändert, so dass zeitnah eine Winkelbedingung zur Netzsynchronisation der permanenterregten Synchronmaschine erfüllt ist. Würde die Drehzahl exakt identisch zur Netzdrehzahl gewählt, ist es möglich, dass die Erfüllung einer Drehwinkelbedingung lange dauert oder gar nicht erfüllt wird, da sich Netzwinkel und Motorwinkel in diesem Zustand mit gleichem Abstand folgen und sich somit der Differenzwinkel nahezu nicht ändert.

Eine weitere Ausgestaltung sieht vor, dass das vorgegebene Kriterium umfasst, dass der Differenzwinkel, der sich aus der Differenz zwischen dem Netzwinkel und dem Rotorwinkel ergibt, in einem vordefinierten Differenzwinkelkorridor zum Liegen kommt. Liegen sowohl der Differenzwinkel als auch die Motordrehzahl jeweils in ihrem jeweilig definierten Zielkorridor, so kann die permanenterregte Drehstrommaschine ohne starke Pendelungen im Antriebsstrang oder ohne die Überschreitung von maximalen Stromwerten an das Netz synchronisiert werden. Die Werte, sowohl für den Zielkorridor der Drehzahl als auch für den Zielkorridor des Winkels können während des Betriebs der Drehstrommaschine bzw. während einer Vielzahl an Hochläufen gelernt werden. Hierdurch ist es möglich, unterschiedliche Kombinationen von Drehstrommaschinen und Sanftstartern aneinander zu betreiben. Die hierbei "gelernten" Werte für den Differenzwinkel und die Motordrehzahl können in einem Speicher hinterlegt werden, so dass für ähnliche Kombinationen die bereits gelernten Werte weiter verwendet werden können.

Eine weitere zweckmäßige Ausgestaltung sieht vor, dass das vorgegebene Kriterium umfasst, dass ein Betrag eines Gesamtflusses, der sich durch die Addition eines durch die Permanentmagnete erzeugten Flusses und eines durch einen Dämpferkäfig erzeugten Flusses ergibt, einen vorgegebenen Mindestflusswert übersteigt, wobei der Betrag des Gesamtflusses aus den gemessenen Motorspannungen bestimmt wird. Durch die geometrische Addition der Flüsse kann es Zeitpunkte geben, in denen die Maschinenflüsse gegensinnig gerichtet sind und der resultierende Gesamtfluss deutlich kleiner als der durch die Permanentmagnete erzeugte Fluss ist. Selbst wenn in diesem Moment der Differenzwinkel und die Drehzahl in einer geeigneten Konstellation liegen würden, kann es zu einem Überstromereignis kommen, da die Gegen -EMK(elektromotorische Kraft) der Drehstrommaschine im Verhältnis zur Netzspannung zu gering wäre und damit ein großer Strom auftreten würde. Demzufolge ist es zweckmäßig, zusätzlich einen Mindestwert für den Betrag des Gesamtflusses einzuhalten, welcher durch Messung der Motorspannungen ermittelt werden kann.

In einer weiteren Ausgestaltung kann der Kontaktzeitpunkt ein messtechnischer Zeitpunkt des Leitens der Bypasskontakte sein. In diesem Fall kann die Ausgabe eines Steuersignals zur Erzeugung eines Zündpulses für die Thyristoren unterbleiben. Alternativ kann der Kontaktzeitpunkt eine durch Versuche ermittelte Zeitdauer seit dem Betätigungszeitpunkt sein, insbesondere zuzüglich einer Sicherheitsmarge. Hierdurch ist es nicht erforderlich, den Zeitraum, der von dem Betätigungszeitpunkt bis zu dem Kontaktzeitpunkt der Bypasskontakte reicht, messtechnisch zu ermitteln, sondern der Zeitraum kann - auf Erfahrungswerten basierend - vorab festgelegt werden. Durch das Vorsehen einer ausreichenden Sicherheitsmarge kann dabei immer sichergestellt werden, dass die Bypasskontakte leitend geschaltet sind, bevor eine Ansteuerung der Thyristoren unterbleibt.

Es wird ferner ein Computerprogrammprodukt vorgeschlagen, das direkt in den internen Speicher eines digitalen Computers geladen werden kann und Softwarecodeabschnitte umfasst, mit denen die Schritte des hierin beschriebenen Verfahrens ausgeführt werden, wenn das Produkt auf dem Computer läuft. Das Computerprogrammprodukt kann in der Gestalt eines Datenträgers, z.B. einer DVD, einer CD-ROM, einem USB-Speicherstick und dergleichen verkörpert sein. Ebenso kann das Computerprogrammprodukt als ein über ein leitungsgebundenes oder drahtloses Netz ladbares Signal vorliegen.

Es wird ferner eine Steuervorrichtung für eine Drehstrommaschine mit einem Thyristoren umfassenden Sanftstarter sowie mechanischen Bypasskontakten zur Überbrückung der Thyristoren im Netzbetrieb vorgeschlagen. Die Steuervorrichtung zeichnet sich dadurch aus, dass diese dazu eingerichtet ist, das hierin beschriebene Verfahren durchzuführen. Hiermit sind die gleichen Vorteile verbunden, wie diese in Verbindung mit dem erfindungsgemäßen Verfahren beschrieben wurden.

Weiter wird eine Drehstrommaschine mit einem Thyristoren umfassenden Sanftstarter sowie mit mechanischen Bypasskontakten zur Überbrückung der Thyristoren im Netzbetrieb vorgeschlagen. Diese ist zur Durchführung des hierin beschriebenen Verfahrens ausgebildet, wodurch eine Netzsynchronisation der permanenterregten Drehstrommaschine an ein Versorgungsnetz ermöglicht ist.

Die Erfindung wird nachfolgend anhand der Figuren näher erläutert:
- Fig. 1: einen Schnitt durch eine beispielhafte Drehstrommaschine;
- Fig. 2: eine schematische Darstellung des erfindungsgemäßen Aufbaus;
- Fig. 3: einen Ablaufplan des erfindungsgemäßen Verfahrens; und
- Fig. 4 und 5: zeitliche Verläufe der Drehzahl und der Phasenströme zweier verschiedener Messungen einer Netzsynchronisation.

Fig. 2 zeigt den prinzipiellen gewünschten Aufbau der als permanenterregte Synchronmaschine M ausgebildeten Drehstrommaschine mit Sanftstarter SS (Z.B. Sirius-Sanftstarter) ohne Geber und mit Geber G links. Wie eingangs beschrieben, kann die Drehstrommaschine z.B. als eine Innenpolmaschine mit einem Stator St und einem Läufer L ausgebildet sein. Der Läufer L umfasst einen magnetischen Nordpol N und Südpol S. Der Stator St umfasst Wicklungsstränge U, V, W. Der Läufer L kann z.B. drehfest (oder über ein Getriebe) mit einer nicht dargestellten Welle verbunden sein, welche von einer externen Last mit einem, insbesondere konstanten, Moment beaufschlagt ist.

Mit Hilfe des von der Anmelderin in der WO 2018/086688 A1 vorgestellten Verfahrens erfolgt eine Berechnung von Zündzeitpunkten der Thyristoren des Sanftstarters SS, wodurch auf Geber verzichtet werden kann. Das geberlose Startverfahren basiert auf der Überlegung, dass bei der erstmaligen Zündung der Thyristoren die Drehstrommaschine (auch: der Motor) mit dem maximal möglichen Drehmoment beschleunigt wird. Hierdurch soll sichergestellt werden, dass der Motor nach der Erstzündung bereits eine bestimme minimale Drehzahl überschritten hat und somit die induzierten Spannungen während der Prinzip bedingten Sperrzeit der Thyristoren hinreichend genau gemessen werden können. Aus den induzierten Spannungen kann anschließend nach den bereits bekannten sog. EMK-Verfahren der elektrische Winkel des Motors ermittelt und dem Benecke-Verfahren (aus der oben genannten Dissertation) übergeben werden. Zudem kann während einer zweiphasigen Zündung die Spannung der dritten Phase direkt gemessen und bei der Auswertung berücksichtigt werden.

Da Motoren an Sanftanlaufgeräten meist passive Lasten mit linearen oder quadratischen Lastkennlinien treiben, dient das Drehmoment bei der Erstzündung nahezu vollständig zur Beschleunigung der trägen Masse. Insofern kann davon ausgegangen werden, dass die Beschleunigung bei der Erstzündung ausreichend ist und die induzierten Spannungen hinreichend genau gemessen werden können. Bei der Messung der Spannungen kann auf die im Sanftstarter ohnehin vorhandene Messsensorik zurückgegriffen werden. Das Verfahren benötigt also keine zusätzliche Hardware.

Das geberlose Startverfahren umfasst zwei Schritte.

### Schritt 1: Ermittlung des optimalen Zündwinkels:

Nachdem das Verfahren zur initialen Ausrichtung der Maschine abgeschlossen ist, ist der aktuelle Winkel des Motors bekannt. Basierend auf diesem bekannten Startwinkel kann gemäß dem oben genannten Verfahren jener Zündwinkel des Sanftstarters berechnet werden, bei dem das im Motor erzeugte Drehmoment für einen gegebenen Maximalstrom maximal ist. Um bei der ersten Zündung der Thyristoren ein möglichst hohes Drehmoment zu entwickeln, wird der bei der Erstzündung zulässige Maximalstrom auf den für die Leistungshalbleiter maximal zulässigen Strom gesetzt.

Bei der Berechnung des optimalen Zündwinkels geht generell auch der Verlauf des Drehwinkels und der Drehzahl während der Zündung der Thyristoren ein, jedoch sind diese bei der Berechnung des Zündwinkels nicht bekannt. Aus diesem Grund soll der optimale Zündwinkel für die Erstzündung im Rahmen eines Inbetriebnahmeverfahrens vorab für den Antrieb ermittelt werden.

### Schritt 2: Umschaltung auf EMK (Elektromotorische Kraft)-Verfahren:

Nachdem die permanenterregte Synchronmaschine durch die Erstzündung beschleunigt wurde, sind die durch die Drehung der Maschine induzierten Spannungen groß genug, um sie während der Sperrphase der Thyristoren messen zu können. Aus den gemessenen Spannungen kann anschließend, z. B. durch einen Beobachter oder durch eine einfache Arcustangens-Berechnung der Flusswinkel der Maschine ermittelt werden. Ebenso ist es denkbar, den Drehwinkel alleine auf Basis der anregenden Spannungen, der gemessenen Ströme und der Maschinengleichungen, also mithilfe einer Berechnungsvorschrift, zu ermitteln.

Unabhängig vom gewählten Ansatz sind in den genannten Fällen bereits zahlreiche Verfahren aus dem Gebiet der geberlosen Regelung bekannt und es kann auf diese zurückgegriffen werden. Der aus dem EMK-Verfahren ermittelte Flusswinkel wird dem Benecke-Verfahren als Istwert übergeben und hieraus der nächste optimale Zündwinkel bei Drehung der Maschine ermittelt.

Mit dem vorgenannten Verfahren wird der Motor M gezielt beschleunigt. Der Sanftstarter SS verfügt neben den Thyristoren, die zum Beschleunigen eingesetzt werden, über nicht näher dargestellte Bypasselemente, welche zur Überbrückung der Thyristoren bei Abschluss des Motorstarts zur Netzsynchronisation eingesetzt werden. Die Bypasselemente stellen elektromechanische Schaltelemente, z.B. ein Netzschütz oder ein Relais, dar. Mit diesen Bypasselementen wird der Motor M dann fest mit dem Netz verbunden, wodurch der Startvorgang endgültig abgeschlossen ist. Bei einer Asynchronmaschine ist dieser Vorgang auf einfache Weise realisierbar: Ist eine vorgegebene Zieldrehzahl erreicht, können die Bypasselemente geschlossen werden und der Startvorgang ist abgeschlossen. Bei der Asynchronmaschine kommt es zu keinerlei Überstromereignissen oder Pendelungen im Antriebsstrang. Bei der permanenterregten Drehstrommaschine ist es zweckmäßig zusätzlich mindestens den Differenzwinkel zwischen dem Netz- und Rotorwinkel zu berücksichtigen, um starke Pendelungen des Antriebsstrangs und große Überströme zu verhindern. Das hierbei gewählte Vorgehen wird nachfolgend beschrieben.

Bei den Bypasselementen handelt es sich um mechanische Schaltelemente, die eine konstruktiv bedingte Zeit brauchen, um geschlossen zu werden. Die Zeitspanne zwischen Ansteuerung und tatsächlichem Schluss (d.h. Leitendschalten) der Kontakte beträgt einige Millisekunden und wird als Verzugszeit bezeichnet. Dies bedeutet, dass ca. ein oder mehrere Netzperioden vergehen, bis die Reaktion auf die Anforderung zum Schließen in Gestalt des Empfangs eines ersten Steuersignals auftritt. Da sich in dieser Zeit die Drehzahl und der Differenzwinkel bereits deutlich verändert haben können, ist diese Verzögerung für ein gezieltes Zuschalten nicht akzeptabel. Zur Überbrückung der Verzugszeit werden die Thyristoren des Saftstarters zusammen mit der Phasenstrommessung genutzt. Erfolgt der Zuschaltbefehl (als Folge des Erhalts des ersten Steuersignals), erfolgt die Ansteuerung der Thyristoren des Saftstarters derart, dass ein jeweiliger Thyristor des Sanftstarters SS immer dann eine Reihe von Zündimpulsen erhält, wenn der Betrag des Stroms in der jeweiligen Phase einen definierten Wert unterschreitet. Die Abgabe der Zündpulse endet erst dann, wenn ein Stromwert ermittelt wird, bei dem ein Schließen der Bypasskontakte als sicher betrachtet werden kann. Dies kann entweder messtechnisch oder durch eine vorbestimmte Zeit, optional durch Berücksichtigung einer Sicherheitsmarge, festgestellt werden. Während des parallelen Betriebs der Thyristoren und der Bypasselemente sind die Thyristoren nahezu dauerhaft gezündet, was einem geschlossenen Bypasselement im Verhalten nahekommt. Nachdem das Schließen der Bypasselemente sichergestellt ist, werden die Thyristoren nicht mehr gezündet. Dieses Vorgehen ermöglicht ein für den Motor M faktisch verzögerungsfreies Zuschalten an das Netz und bildet die Basis zur gezielten Netzsynchronisation des Motors M.

Damit der Motor M an das Versorgungsnetz geschalten werden kann, ohne dass es zu starken Pendelungen im Antriebsstrang kommt oder Strommaximalwerte überschritten werden, sollten der Differenzwinkel und die Motordrehzahl jeweils in einem Zielkorridor liegen. Die Werte, sowohl für den Zielkorridor der Drehzahl, als auch für den Zielkorridor des Differenzwinkels können auf verschiedene Art und Weise erzeugt werden. Ideal ist ein möglichst kleiner Winkel zwischen Rotorwinkel und Netzwinkel, wobei der Differenzwinkel eine Folge der Belastung des Rotors des Motors ist.

Zum einen kann der Sanftstarter SS eigenständig zu einem beliebigen Zeitpunkt zuschalten und über interne Strommessungen im Nachhinein feststellen, ob der Zeitpunkt der Zuschaltung für den Motor ein geeigneter Zuschaltzeitpunkt ist. Durch das Zuschalten bei verschiedenen Winkel-Drehzahl-Konstellationen entsteht damit eine Übersicht an möglichen Kombinationen, anhand derer ein Korridor für den Differenzwinkel und die Motordrehzahl ableitbar ist, in welchem vorgegebene Grenzen eingehalten werden. Da durch diesen iterativen Prozess auch Grenzwerte häufiger überschritten werden, benötigt ein Algorithmus eine Zeit der "Anlernung", bis er zuverlässig funktioniert. Verbessert werden kann das Ergebnis dadurch, dass grundsätzlich ungeeignete Kombinationen von Vorneherein ausgeschlossen werden. Eine andere Möglichkeit besteht darin, für einen angeschlossenen Motortyp Simulationen durchzuführen, aus denen Korridore für den Drehwinkel und die Drehzahl abgeleitet werden. Diese abgeleiteten Parameter können dann in einem zugeordneten Sanftstarter ausgewählt werden bzw. diesem z.B. über einen Cloud-Service nachträglich mitgeteilt werden. Dies ermöglicht eine nachträgliche Bereitstellung von Parametersätzen, je nach Kundenanforderungen und Kombinationen von Motortyp und Sanftstarter.

Für eine sichere Netzsynchronisation ist die Wahl eines geeigneten Drehzahlwertes zu berücksichtigen. Im Gegensatz zum Sanftstarter SS für Asynchronmaschinen wird hier zweckmäßigerweise nicht die Netzdrehzahl als Zielwert gewählt, sondern eine Drehzahl, die etwas höher oder etwas niedriger als die Netzdrehzahl liegt. Dies stellt sicher, dass sich der Winkel des Netzes ausreichend schnell ändert, so dass zeitnah die Winkelbedingung zum Zuschalten des Motors erfüllt wird. Wird die Drehzahl exakt identisch zur Netzdrehzahl gewählt, kann es passieren, dass die Erfüllung der Drehwinkelbedingung lange dauert oder die Drehwinkelbedingung gar nicht erfüllt wird, da sich der Netzwinkel und der Motorwinkel in diesem Zustand mit gleichem Abstand folgen und sich somit der Differenzwinkel nahezu nicht ändert.

Aus den Eigenschaften der permanenterregten Drehstrommaschine mit Dämpferkäfig ergibt sich eine weitere zu berücksichtigende Bedingung. Bei einem Motor mit Dämpferkäfig addieren sich der durch die Permanentmagnete erzeugte und der durch den Dämpferkäfig erzeugte Fluss geometrisch. Durch die geometrische Addition der Flüsse kann es Zeitpunkte geben, in denen die Maschinenflüsse gegensinnig gerichtet sind und der resultierende Gesamtfluss deutlich kleiner ist als der durch die Permanentmagnete erzeugte Fluss. Selbst wenn in diesem Moment der Differenzwinkel und die Drehzahl in einer perfekten Konstellation liegen würden, käme es zu einem Überstromereignis, da die Gegen-EMK des Motors im Verhältnis zur Netzspannung zu gering wäre und somit ein großer Stromwert auftreten würde. Demzufolge ist zusätzlich ein Mindestwert für den Betrag des Gesamtflusses einzuhalten, welcher durch Messung der Motorspannungen ermittelt werden kann.

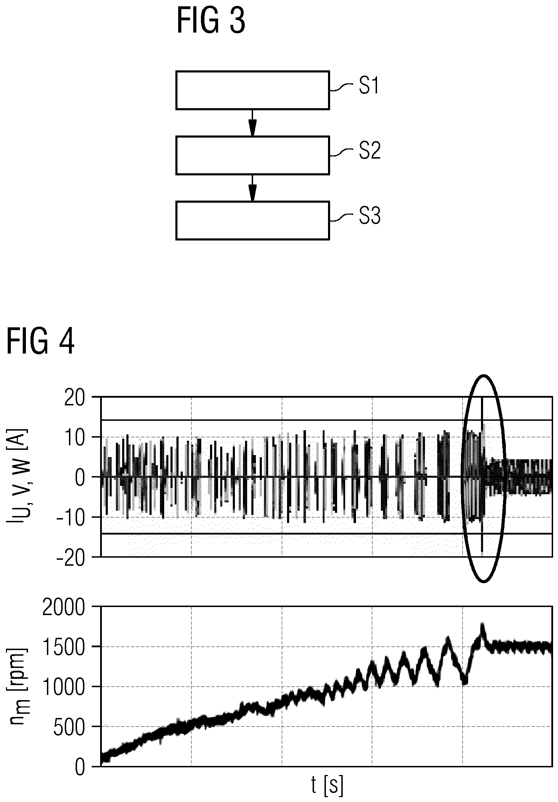

Fig. 3 zeigt einen Ablaufplan des erfindungsgemäßen Verfahrens. In Schritt S1 wird ein erstes Steuersignal erzeugt, durch das das Leitendschalten der mechanischen Bypasskontakte initiiert wird, und zwar nach dem Erreichen eines vorgegebenen Kriteriums beim Hochlaufen der Drehstrommaschine an dem Sanftstarter, wobei der Zeitpunkt der Erzeugung des ersten Steuersignals einen Betätigungszeitpunkt der Bypasskontakte repräsentiert. Das erste Kriterium umfasst eine Drehzahl der Drehstrommaschine und/oder einen Differenzwinkel und/oder einen Betrag des Gesamtflusses, der sich durch die Addition eines durch die Permanentmagnete erzeugten Flusses und eines durch einen Dämpferkäfig erzeugten Fluss ergibt. In Schritt S2 erfolgt die Erzeugung von Zündpulsen für die Thyristoren innerhalb eines Zeitraumes, der von dem Betätigungszeitpunkt bis zu einem Kontaktzeitpunkt der Bypasskontakte reicht, mittels eines zweiten Steuersignals, wobei ein jeweiliger Zündpuls für einen Thyristor dann erzeugt wird, wenn eine Phasenstrommessung ergibt, dass der Strom in der zugeordneten Phase einen vorgegebenen Wert unterschreitet. In Schritt S3 erfolgt ein Betreiben der Drehstrommaschine im Netzbetrieb über die Bypasskontakte, nachdem der Zeitraum abgeschlossen ist.

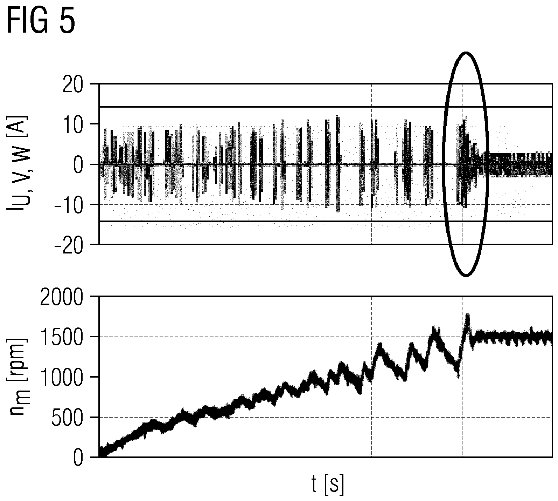

In den Figuren 4 und 5 sind zeitliche Verläufe der Drehzahl n und der Phasenströme I_{U,V,W} der drei Phasen U, V, W beim Hochlaufvorgang und der Netzsynchronisation dargestellt. Dabei zeigt Fig. 4 die Situation, in der ein Überstrom auftritt, wobei dieser Zeitpunkt kurz vor Erreichen einer Zieldrehzahl von nₘ ≈ rpm auftritt. In dem I-t-Diagramm ist der Zeitpunkt der Netzsynchronisation und dem Auftreten des Überstroms durch die elliptische Markierung visualisiert. Aus den Diagrammen der Fig. 5 ist ohne weiteres ersichtlich, dass bei der Netzsynchronisation mit Hilfe des erfindungsgemäßen Verfahrens beim Erreichen der Zieldrehzahl (nₘ ≈ 1500 rpm) die Phasenströme bei der Netzsynchronisation keine Überschwinger aufweisen. Der entsprechende Teil im I-t-Diagramm ist wiederum durch eine Ellipse markiert.

## Patentansprüche

1. Verfahren zur Netzsynchronisation einer permanenterregten Drehstrommaschine (M) mit einem Thyristoren umfassenden Sanftstarter (SS) sowie mit mechanischen Bypasskontakten zur Überbrückung der Thyristoren im Netzbetrieb, umfassend die Schritte:
a) Erzeugung eines ersten Steuersignals, durch das das Leitendschalten der mechanischen Bypasskontakte initiiert wird, nach dem Erreichen eines vorgegebenen Kriteriums beim Hochlaufen der Drehstrommaschine an dem Sanftstarter, wobei der Zeitpunkt der Erzeugung des ersten Steuersignals einen Betätigungszeitpunkt der Bypasskontakte repräsentiert;
b) Erzeugung von Zündpulsen für die Thyristoren innerhalb eines Zeitraumes, der von dem Betätigungszeitpunkt bis zu einem Kontaktzeitpunkt der Bypasskontakte reicht, mittels eines zweiten Steuersignals, wobei ein jeweiliger Zündpuls für einen Thyristor dann erzeugt wird, wenn eine Phasenstrommessung ergibt, dass der Strom in der zugeordneten Phase einen vorgegebenen Wert unterschreitet;
c) Betreiben der Drehstrommaschine (M) im Netzbetrieb über die Bypasskontakte.

2. Verfahren nach Anspruch 1, **dadurch gekennzeichnet, dass** das vorgegebene Kriterium umfasst, dass eine Drehzahl der Drehstrommaschine (M) eine in einem vordefinierten Drehzahlkorridor liegende Zieldrehzahl der Drehmomentmaschine (M) erreicht hat.

3. Verfahren nach Anspruch 2, **dadurch gekennzeichnet, dass** die Drehzahl geringfügig höher oder niedriger als die Netzdrehzahl ist.

4. Verfahren nach einem der vorhergehenden Ansprüche, **dadurch gekennzeichnet, dass** das vorgegebene Kriterium umfasst, dass ein Differenzwinkel, der sich aus der Differenz zwischen dem Netzwinkel und dem Rotorwinkel ergibt, in einem vordefinierten Differenzwinkelkorridor zum Liegen kommt.

5. Verfahren nach Anspruch 2, 3 oder 4, **dadurch gekennzeichnet, dass** der Drehzahlkorridor und/oder der Differenzwinkelkorridor während des Betriebs des Drehstrommaschine (M) bzw. während einer Vielzahl an Hochläufen gelernt wird.

6. Verfahren nach einem der vorhergehenden Ansprüche, **dadurch gekennzeichnet, dass** das vorgegebene Kriterium umfasst, dass ein Betrag eines Gesamtflusses, der sich durch die Addition eines durch die Permanentmagnete erzeugten Flusses und eines durch einen Dämpferkäfig erzeugten Flusses ergibt, einen vorgegebenen Mindestflusswert übersteigt, wobei der Betrag des Gesamtflusses aus den gemessenen Motorspannungen bestimmt wird.

7. Verfahren nach einem der Ansprüche 1 bis 6, **dadurch gekennzeichnet, dass** der Kontaktzeitpunkt ein messtechnisch ermittelter Zeitpunkt des Leitens der Bypasskontakte ist.

8. Verfahren nach einem der Ansprüche 1 bis 6, **dadurch gekennzeichnet, dass** der Kontaktzeitpunkt eine durch Versuche ermittelte Zeitdauer seit dem Betätigungszeitpunkt ist, zuzüglich einer Sicherheitsmarge ist.

9. Computerprogrammprodukt, das direkt in den internen Speicher eines digitalen Computers geladen werden kann und Softwarecodeabschnitte umfasst, mit denen die Schritte gemäß einem der vorhergehenden Ansprüche ausgeführt werden, wenn das Produkt auf dem Computer läuft.

10. Steuervorrichtung für eine Drehstrommaschine (M) mit einem Thyristoren umfassenden Sanftstarter (SS) sowie mit mechanischen Bypasskontakten zur Überbrückung der Thyristoren im Netzbetrieb, **dadurch gekennzeichnet, dass** diese dazu eingerichtet ist, das Verfahren gemäß einem der Ansprüche 1 bis 8 durchzuführen.

11. Drehstrommaschine mit einem Thyristoren umfassenden Sanftstarter (SS) sowie mit mechanischen Bypasskontakten zur Überbrückung der Thyristoren im Netzbetrieb, **dadurch gekennzeichnet, dass** diese eine Steuereinrichtung umfasst, die dazu ausgebildet ist, das Verfahren nach einem der Patentansprüche 1 bis 8 zu deren Steuerung durchzuführen.
